# EUROPEAN PATENT SPECIFICATION

(11) **EP 3 992 520 B1**
(45) Date of publication and mention of the grant of the patent: **27.03.2024**
(21) Application number: 21204478.8
(22) Date of filing: 25.10.2021
(51) Int. Cl.: F17C 9/04, F17C 9/00

(54) **METHOD AND SYSTEM FOR FORMING AND DISPENSING A COMPRESSED GAS**
VERFAHREN UND SYSTEM ZUR HERSTELLUNG UND ABGABE EINES KOMPRIMIERTEN GASES
PROCÉDÉ ET SYSTÈME DE FORMATION ET DE DISTRIBUTION DE GAZ COMPRIMÉ

(30) Priority: 28.10.2020 US 202017082067
(43) Date of publication of application: 04.05.2022
(73) Proprietor: Air Products and Chemicals, Inc., Allentown, PA 18195-1501 (US)
(72) Inventor: Cacciapalle, Michael, Plymouth Meeting, 19462 (US); Cohen, Joseph P, Bethlehem, 18017 (US); Chalk, David Jonathan, Slatington, 18080 (US); Farese, David John, Riegelsville, 18077 (US); Kyvelos, Anthony R., Fogelsville, 18051 (US)
(74) Representative: SSM Sandmair

(56) References cited:
- WO-A1-2019/210197
- DE-A1-102008 060 127
- KR-B1- 102 017 946
- US-B2- 10 655 784

## Description

The present invention relates to a method and system for forming a compressed gas from a process fluid provided at a cryogenic temperature and dispensing the compressed gas to a compressed gas receiver. More specifically, the invention relates to a method and system for forming a compressed gas, e.g. a compressed fuel gas, from a process fluid, as for example hydrogen, natural gas, one or more hydrocarbons, and mixtures thereof provided in the liquid or mixed liquid-gaseous phase, and dispensing the compressed gas into a receiving vessel, as for example a vehicle fuel tank or one or more compressed gas storage vessels disposed stationary at a dispensing station or mounted on a tank truck or tube trailer.

Compressed gases are used in many industries, including healthcare, chemicals, manufacturing, and in particular as fuel gases for vehicles. Liquefied gases provide a benefit to distribution because of their high density at low pressure. These fluids are accordingly transported and stored over longer times and in larger quantities as cryogenic liquids from which the compressed gases are formed on demand, for example, to dispense the compressed gas into a vehicle fuel tank and/or one or more compressed gas storage vessels at a compressed gas dispensing station or on a mobile compressed gas storage trailer.

In many applications such as refueling vehicles and/or charging compressed gas storage vessels it is desirable to charge the respective compressed gas receiver in a time efficient manner without violating the vessel temperature limit. For example, it is provided that hydrogen-powered vehicles be filled to 700 bar within 3 minutes, without violating the temperature limit of the receiving vessel, which typically is 85°C for vehicle fuel tanks. At the same time, it is required that the temperature of the hydrogen does not drop below -40°C, while entering the fuel tank during the filling process. When hydrogen or other process fluids, which are gaseous at ambient pressure and temperature, are stored as a liquid, then pumped to high pressure for use in e.g. fueling vehicles or other high-pressure applications or storage, the compressed fluid will exit the pump typically at a temperature colder than -150°C. The temperature is too cold for the compressed gas to be stored in conventional storage tanks or sent on to most customer processes.

A common solution to this problem is to use some sort of vaporizer, usually a forced draft ambient air vaporizer, to warm the compressed process fluid to a temperature where it can be utilized. There are two problems with this solution. The first is that the air through the vaporizer can create a large fog cloud which can be disconcerting to observers and potentially hazardous. The second problem is that the energy that was used to refrigerate the process fluid, e.g. hydrogen, is wasted when the compressed fluid is just warmed up.

One solution to the fogging problem is to use resistance heat to warm the compressed fluid, rather than ambient air. With this solution, however, energy is being wasted twice. Not only is energy used to refrigerate the fluid getting lost, but additional energy is used to dissipate the refrigeration energy. A conventional solution to the energy waste in a system such as a hydrogen fueling station is to allow some of the gas to bypass the vaporizer and go directly to the compressed gas receiver. This approach requires for the compression and the dispensing to be concurrent.

A solution that has been used to deal with the problem of time of compression versus time of dispensing is to have the compressed gas travel through a thermal reservoir such as an aluminum block between the point of compression and the point of dispensing. US 2015/0267865 A1, for example, discloses a method and system for dispensing compressed hydrogen gas to a vehicle fuel tank and proposes to control the temperature of the compressed hydrogen gas by indirect heat exchange in a cold accumulator arranged at a downstream end of the system and a further cold accumulator arranged at an upstream end of the system. The two cold accumulators are connected by means of a thermal fluid circuit in which a thermal fluid is circulated between the two cold accumulators. Aluminum block cold accumulators are limited in their ability to react to variations in the amount of compressed gas to be tempered. The capacity for accumulating heat and cold, as required, is limited by the design of the block.

WO2019210197A1 discloses a known method and system for forming a compressed gas and dispensing it to a compressed gas receiver.

It is an object of the present invention to provide a method and system capable of transforming a cryogenic process fluid, such as for example liquid hydrogen (LHY) and/or liquid natural gas (LNG), into a compressed gas and dispensing the compressed gas into a compressed gas receiver, such as for example a vehicle fuel tank, in a time and energy efficient manner.

It is desirable to have a method and system which can flexibly adapt to variations in demand that could lead to variations in the flow rate and/or the temperature of the cryogenic process fluid and/or the compressed gas.

There is a need to reduce the energy necessary to fulfill the demand for compressed fuel gas at a dispensing station for fueling vehicles and/or tank trucks and/or tube trailers.

### BRIEF SUMMARY

The invention is directed to a method for forming a compressed gas and dispensing it to a compressed gas receiver according to claim 1 and a system for forming compressed gas and dispensing it to a compressed gas receiver according to claim 7.

The present invention accomplishes transforming a cryogenic process fluid into a compressed gas and dispensing the compressed gas to a compressed gas receiver, as in particular a receiving vessel, in a time and energy efficient manner by pressurizing the cryogenic process fluid and heating the pressurized yet still cryogenic process fluid by indirect heat exchange with a thermal fluid provided in a thermal fluid reservoir. The thermal fluid reservoir substitutes the aluminum block material of prior art heat exchangers. The size of the thermal fluid reservoir and accordingly the total amount of thermal fluid and overall heat capacity can flexibly be tailored to the needs of the specific application when designing the thermal fluid reservoir. The mass and heat capacity of the thermal fluid reservoir on the one hand and the heat transfer on the other hand are decoupled to a higher degree than is the case with the metal block heat exchangers. Providing the heat capacity in the form of the thermal fluid reservoir, instead of a (bulky) block of aluminum or other solid heat exchange material, enables a more flexible and precise control of the heat transfer to the pressurized process fluid.

The invention is accordingly directed to a method and system for forming a compressed gas from a cryogenic process fluid and dispensing the compressed gas to a compressed gas receiver. The process fluid is termed "cryogenic process fluid" only to state that it is at a cryogenic (low) temperature as will be defined later.

In the method, a process fluid is provided at a cryogenic temperature. At least a portion of the cryogenic process fluid may be provided in the liquid state. The cryogenic process fluid is pressurized and fed at still a cryogenic temperature to a first heat exchanger. Forming the compressed gas from the pressurized cryogenic process fluid comprises or consists of heating the pressurized cryogenic process fluid in the first heat exchanger by indirect heat exchange with a thermal fluid, such as for example D-Limonene. The thermal fluid is provided in a thermal fluid reservoir at a thermal fluid temperature above the cryogenic temperature of the pressurized cryogenic process fluid when entering the first heat exchanger.

The method furthermore comprises feeding compressed gas formed from the pressurized process fluid to a dispenser. The compressed gas may be formed and sent to the dispenser directly, in-line as formed, or indirectly, after intermediate compressed gas storage, if such is provided for. Compressed gas may be fed to intermediate storage, for example, in one or more compressed gas storage vessels, if present on site stationary and/or on a mobile storage trailer such as a tube trailer. Compressed gas as formed and/or compressed gas from one or more optional compressed gas storage vessels is/are dispensed via the dispenser to the compressed gas receiver.

To effect indirect heat exchange in the first heat exchanger one of the pressurized process fluid and thermal fluid may be conveyed in one or more fluid channels through the first heat exchanger while the other one surrounds the one or more fluid channels in direct contact. In expedient embodiments, the pressurized process fluid is heated in the first heat exchanger by being conveyed through the thermal fluid in indirect heat exchange with the thermal fluid.

If the pressurized process fluid leaving the first heat exchanger is still too cold for dispensing it or sending it to storage, the step of forming the compressed gas may comprise heating pressurized process fluid from the first heat exchanger further by means of a further heat exchanger or preferably a trim heater as for example an electric resistance heater. If necessary, the pressurized process fluid may be heated, in the optional further heating step, to a temperature within the range of e.g. -40°C to 0°C.

For example, in applications typical for the invention the cryogenic process fluid is pressurized and fed by means of a cryogenic feeding device such as a cryogenic pump and/or a cryogenic compressor and exits the cryogenic feeding device at a temperature below -150°C. To fill a receiving vessel, e.g. a fuel tank of a combustion engine or fuel cell vehicle, the pressurized cryogenic process fluid is heated to a temperature of -40°C or higher, and expediently of -17.5°C or lower, preferably to a temperature lower than -33°C.

The present invention is furthermore directed to a system for forming compressed gas and dispensing it to a compressed gas receiver, wherein the system comprises a source of a process fluid at a cryogenic temperature, for example, a storage vessel containing the process fluid at the cryogenic temperature, and a cryogenic feeding device operatively disposed to receive cryogenic process fluid from the source and configured to pressurize the process fluid and feed the pressurized process fluid at still a cryogenic temperature. The cryogenic feeding device may comprise one or more cryogenic pumps and/or one or more cryogenic compressors. The system furthermore comprises a process fluid treatment arrangement for forming the compressed gas from the pressurized cryogenic process fluid, and a dispenser configured to dispense compressed gas to the compressed gas receiver. The process fluid treatment arrangement comprises a first heat exchanger operatively disposed to receive pressurized process fluid from the cryogenic feeding device at still a cryogenic temperature and configured to heat the pressurized process fluid by indirect heat exchange with a thermal fluid. The first heat exchanger may be disposed to receive all the process fluid pressurized and fed by the cryogenic feeding device. Or, it may be disposed to receive only a portion of the process fluid pressurized and fed by the cryogenic feeding device while another portion is fed to a vaporizer, for example.

According to the invention, the system comprises a thermal fluid reservoir of the thermal fluid at a temperature above the cryogenic temperature of the pressurized process fluid, wherein the thermal fluid reservoir is operatively disposed to provide the thermal fluid for the first heat exchanger.

The thermal fluid is provided in the thermal fluid reservoir preferably as a liquid, i.e. the reservoir may contain a bath of the thermal fluid. In embodiments in which the thermal fluid is circulated in a thermal fluid circuit comprising the reservoir, the thermal fluid reservoir contains an amount of thermal fluid in excess of the amount necessary to circulate the thermal fluid in the thermal fluid circuit. If the thermal circuit contains a total mass M₁₁ of thermal fluid and the reservoir container contains a mass m₁₂ out of this total mass, the ratio m₁₂ / M₁₁ may advantageously fulfill the relation m₁₂ / M₁₁ ≥ 0.5, i.e. the mass m₁₂ within the reservoir container may be equal to or greater than the mass of thermal fluid within all other components of the thermal fluid circuit during circulation. More preferably, m₁₂ / M₁₁ ≥ 0.6 or m₁₂ / M₁₁ ≥ 0.7 or m₁₂ / M₁₁ ≥ 0.8. For example, for vehicle refueling stations the volume of thermal fluid in the reservoir container may range from 1000 to 2000 liters and the volume of thermal fluid circulating outside the reservoir container may range from 50 to 200 liters, if the thermal fluid is D-Limonene or a thermal fluid which has an equal or higher heat capacity and can be operated over a similar wide temperature range.

The thermal fluid may in particular be one that stays liquid up to at least 50°C or at least 80°C or at least 100°C. It should stay liquid under the highest ambient temperatures encountered on site. Expediently should it stay liquid down to temperatures below -50°C or below -70°C. D-Limonene and compositions containing D-Limonene are suitable examples of thermal fluids. Suitable compositions are disclosed, for example, in US 6 974 552 B1.

The system may comprise one or more compressed gas storage vessels operatively disposed to receive and configured to store compressed gas from the process fluid treatment arrangement. In advantageous embodiments the process fluid treatment arrangement, the one or more compressed gas storage vessels, and the dispenser are operatively disposed such that a stream of compressed gas formed in the process fluid treatment arrangement can selectively be fed to the one or more compressed gas storage vessels or to the dispenser, bypassing the one or more compressed gas storage vessels, or split between the one or more compressed gas storage vessels and the dispenser.

The dispenser is operatively disposed to receive compressed gas from the process fluid treatment arrangement, i.e. all or only a portion of the compressed gas formed by the process fluid treatment arrangement, and/or the dispenser is operatively disposed to receive compressed gas from the one or more compressed gas storage vessels, if present. The compressed gas received from the process fluid treatment arrangement in-line and/or from the one or more compressed gas storage vessels, if present, is dispensed via the dispenser.

The dispenser may operatively be disposed to receive compressed gas only from the one or more compressed gas storage vessels if present. In such embodiments, compressed gas from the process fluid treatment arrangement is fed only into the one or more compressed gas storage vessels. In preferred embodiments, however, in which the system comprises one or more compressed gas storage vessels, the dispenser is in fluid communication with the process fluid treatment arrangement and is furthermore in fluid communication with the one or more compressed gas storage vessels such that compressed gas may be fed from the process fluid treatment arrangement to the dispenser, bypassing the one or more compressed gas storage vessels, or to the one or more compressed gas storage vessels, or to both the dispenser and the one or more compressed gas storage vessels at the same time.

The first heat exchanger may comprise a casing with an inlet and an outlet for a casing-side fluid, and one or more fluid channels mounted within the casing and operatively disposed to receive a channel-side fluid. The casing-side fluid is one of the thermal fluid and the pressurized cryogenic process fluid. The channel-side fluid is the other one of the pressurized cryogenic process fluid and the thermal fluid. In expedient embodiments, the pressurized cryogenic process fluid is the channel-side fluid which is conveyed in the one or more fluid channels through the first heat exchanger. The first heat exchanger is configured to bring the casing-side fluid, advantageously the thermal fluid, in direct contact with the one or more fluid channels for the channel-side fluid.

The thermal fluid reservoir may be integral to the first heat exchanger. The casing of the first heat exchanger may contain a bath of the thermal fluid, and the one or more fluid channels for conveying the pressurized process fluid may be immersed in the thermal fluid thus provided in a thermal fluid reservoir encased by the first heat exchanger.

In more preferred embodiments, however, the thermal fluid is provided in a thermal fluid reservoir separate from the first heat exchanger. The first heat exchanger is disposed externally to the thermal fluid reservoir. The first heat exchanger may be attached on the outside of a thermal fluid reservoir container or disposed at a distance to the thermal fluid reservoir. The thermal fluid reservoir and the first heat exchanger are arranged in a thermal fluid circuit in fluid flow communication such that the thermal fluid can be circulated in the thermal fluid circuit from the thermal fluid reservoir to and through the first heat exchanger and from there back to and through the thermal fluid reservoir. The thermal fluid circuit may comprise one or more pumps for circulating the thermal fluid.

A variable drive, e.g. a variable frequency drive (VFD), may be provided and coupled with the one or more pumps to allow for varying the speed(s) of the one or more pumps and thereby varying the flow rate of thermal fluid fed through the first heat exchanger. In embodiments in which two or more pumps are used to circulate the thermal fluid the variable drive may comprise two or more electric drive motors, one for each pump. The respective drive motor may directly be attached to the respective pump. The variable drive may be configured to speed up and slow down the one or more pumps in response to the temperature of the thermal fluid. The system may for example comprise a thermal fluid temperature sensor coupled with the variable drive and disposed at or close to the thermal fluid exit of the first heat exchanger to sense the temperature of the thermal fluid exiting the first heat exchanger. The variable drive may speed up the respective pump if the measured temperature of the thermal fluid is below a predetermined lower temperature level indicative that the thermal fluid temperature has come too close to the freezing point of the thermal fluid.

In embodiments in which compressed gas is sent from one or more compressed gas storage vessels to the dispenser and/or during an initial phase of a dispensing operation, after a certain time of rest has elapsed, compressed gas may have been warmed and reached a temperature above the allowable dispensing temperature. Under these conditions it may become necessary to cool the compressed gas before dispensing it via the dispenser. The system comprises and the method employs accordingly a second heat exchanger arranged downstream of the first heat exchanger and/or downstream of the one or more compressed gas storage vessels, if present, to cool the compressed gas before it is fed to the dispenser or while it is fed through the dispenser and dispensed to the compressed gas receiver.

The second heat exchanger is configured to cool the compressed gas in indirect heat exchange with the thermal fluid, i.e. with the thermal fluid provided in the thermal fluid reservoir. The thermal fluid is circulated in a thermal fluid circuit that comprises the thermal fluid reservoir, the first heat exchanger, and the second heat exchanger. Thermal fluid is cooled by indirect heat exchange with the pressurized process fluid in the first heat exchanger and heated by indirect heat exchange with the compressed gas in the second heat exchanger. Heating the thermal fluid in the second heat exchanger compensates at least partially for the cooling of the thermal fluid in the first heat exchanger, and vice-versa, thereby increasing the energy efficiency of the conditioning of the compressed gas further.

To effect indirect heat exchange in the second heat exchanger one of the pressurized process fluid and thermal fluid may be conveyed in one or more fluid channels through the second heat exchanger while the other one surrounds the one or more fluid channels in direct contact. In expedient embodiments, the pressurized process fluid is heated in the second heat exchanger by being conveyed through the thermal fluid.

In preferred embodiments, the second heat exchanger is disposed externally to the thermal fluid reservoir. In principle, however, the thermal fluid reservoir may be integral to the second heat exchanger. If integral, the casing of the second heat exchanger may contain a bath of the thermal fluid, and the one or more fluid channels for conveying the pressurized process fluid may be immersed in the thermal fluid thus provided in a thermal fluid reservoir encased by the second heat exchanger.

The thermal fluid circuit comprises a first branch and a second branch arranged in parallel to the first branch. The thermal fluid reservoir may advantageously be common to both branches. The first branch may comprise the first heat exchanger, the thermal fluid reservoir and a first pump for circulating the thermal fluid in the first branch, and the second branch may comprise the second heat exchanger, the thermal fluid reservoir and a second pump for circulating the thermal fluid in the second branch. The arrangement of the heat exchangers in parallel branches increases the flexibility in conditioning the compressed gas with respect to temperature and enables a more precise control of the temperature of the compressed gas.

If a variable drive is provided, as mentioned above, the variable drive may be configured to vary the speed of the first pump and the speed of the second pump independently from one another. The variable drive, such as for example a VFD, may comprise a first electric drive motor coupled with the first pump and a second electric drive motor coupled with the second pump. The first electric drive motor may be attached directly to the first pump and/or the second electric drive motor may be attached directly to the second pump. The first electric drive motor may be controlled in dependence of a temperature of the thermal fluid exiting the first heat exchanger, as described above. The variable drive may be configured to vary the speed of the second pump such that the temperature of the thermal fluid and/or the temperature of the compressed gas exiting the second heat exchanger is/are controlled, for example kept within a respective predetermined temperature range. Slowing down the pumping rate when less heating is required in the first heat exchanger and/or less cooling is required in the second heat exchanger reduces the energy input and hence increases the overall energy efficiency.

The first heat exchanger and/or the second heat exchanger, may advantageously be designed as a helically coiled first heat exchanger and/or a helically coiled second heat exchanger, the respective heat exchanger comprising a casing for one of the thermal fluid and the pressurized process fluid as a casing-side fluid and one or more helically coiled fluid channels mounted within the casing for conveying the other one of the pressurized process fluid and the thermal fluid as a channel-side fluid through the casing. The respective helically coiled heat exchanger may expediently be configured and operated to effect heat exchange in counter or cross-current flow of the two fluids, the casing-side fluid surrounding the one or more helically coiled fluid channels in a spiral flow path.

One or more thermal fluid heaters may be provided in addition to the second heat exchanger to heat the thermal fluid, if necessary. A thermal fluid heater may be disposed within or on a wall of a thermal fluid reservoir container or apart from the reservoir container to heat the thermal fluid in the thermal fluid reservoir or on its way to or from the first heat exchanger. The one or more thermal fluid heaters may expediently be provided as electrical resistance heater(s).

The total mass M₁₁ of thermal fluid in the thermal fluid circuit is inclusive the thermal fluid circulated through the second heat exchanger. The relations specified above for the ratio m₁₂ / M₁₁ also hold for the enlarged thermal fluid circuit.

The process fluid treatment arrangement may comprise a vaporizer operatively disposed to receive a portion of the process fluid from the cryogenic feeding device and configured to vaporize this portion of the process fluid. An optional vaporizer may for example be arranged in parallel to the first heat exchanger and operationally be disposed to send the gas to the one or more compressed gas storage containers, if present, or to the dispenser, by-passing the optional one or more compressed gas storage containers.

The process fluid may be provided in the liquid state or as a mixed liquid-gaseous phase fluid. It may be provided in a supply vessel. In preferred embodiments the compressed gas consists of or comprises as its main constituent(s) hydrogen and/or natural gas and/or one or more gaseous hydrocarbon(s) such as methane, ethane, propane, butane, etc. In these embodiments the process fluid, as provided, comprises hydrogen and/or one or more hydrocarbon(s) in the liquid or mixed liquid-gaseous state as the main or sole constituent(s). This does not exclude that the process fluid, as provided, may in principle comprise or consist of any other cryogenic fluid as for example liquid oxygen, liquid nitrogen, liquid argon, liquid helium, liquified air, liquid carbon dioxide, or any mixture thereof.

As used herein, the term "cryogenic process fluid" is intended to mean a liquid, gas, or mixed-phase fluid having a temperature less than -70°C. The term, as used herein, even comprises gaseous fluids as long as the temperature of the gas does not exceed -70°C. Examples of cryogenic process fluids include liquid hydrogen (LHY), liquid nitrogen (LIN), liquid oxygen (LOX), liquid argon (LAR), liquid helium, liquid carbon dioxide and pressurized, mixed phase cryogenic process fluids (e.g., a mixture of LIH and gaseous hydrogen). For the purpose of the invention a temperature is termed "cryogenic temperature" if it is less than - 70°C. A process fluid at a cryogenic temperature is accordingly a liquid, mixed liquid-gaseous phase, or gaseous fluid having a temperature less than -70°C.

The process fluid may be pressurized to a pressure above the critical point pressure of the process fluid or components thereof, as may for example be the case if the process gas comprises or consists of hydrogen. The pressurized process fluid may therefore be a supercritical fluid or comprise one or more supercritical fluid components. The term "compressed gas" as used herein covers process fluids in the gaseous state as well as in the supercritical state. Hydrogen, for example, as a prime candidate of a process fluid to which the invention pertains may exit the cryogenic feeding device as a supercritical fluid. The process fluid may enter the first heat exchanger as a supercritical fluid. It may exit the first heat exchanger still in the supercritical state or in the gaseous state.

As used herein, "first", "second," "third," etc. are used to distinguish from among a plurality of steps and/or features and/or components, and are not indicative of the total number, or relative position in time and/or space unless expressly stated as such. For example, use of "first" in "first heat exchanger" does not imply the presence of a further heat exchanger, although employment of the second heat exchanger, as described herein, is preferred.

In the claims, letters are used to identify claimed steps (e.g. (a), (b), and (c)). These letters are used to aid in referring to the method steps and are not intended to indicate the order in which claimed steps are performed, unless and only to the extent that such order is specifically recited in the claims.

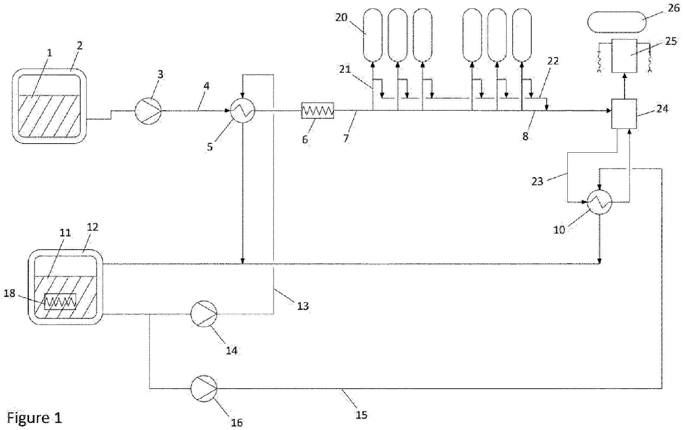

### BRIEF DESCRIPTION OF THE DRAWING

The figure illustrates a method and system for forming compressed gas from a process fluid provided at a cryogenic temperature and dispensing the compressed gas to a compressed gas receiver.

### DETAILED DESCRIPTION OF A PREFERRED EMBODIMENT

The ensuing detailed description provides a preferred exemplary embodiment only, and is not intended to limit the scope, applicability, or configuration of the invention. Rather, the ensuing detailed description of the preferred exemplary embodiment will provide those skilled in the art with an enabling description for implementing the preferred exemplary of the invention, it being understood that various changes may be made in the function and arrangement of elements without departing from the scope of the invention as defined by the claims.

The figure shows a system for forming a compressed gas and dispensing the compressed gas to a compressed gas receiver as in particular a fuel tank of a combustion engine or fuel cell vehicle, or some other pressure rated receiving vessel. The figure also illustrates a method for forming the compressed gas from a cryogenic process fluid, i.e. a process fluid provided at a cryogenic temperature. Forming the compressed gas includes at least pressurizing and heating the cryogenic process fluid. Where the compressed gas is compressed hydrogen, compressed natural gas, or a mixture thereof, the cryogenic process fluid, as provided, is hydrogen, natural gas, or a mixture thereof in the liquid or mixed-liquid-gaseous phase.

The system comprises a source of the cryogenic process fluid as for example a supply vessel 2 filled with the cryogenic process fluid 1, for example, liquid or mixed-phase hydrogen. The system furthermore comprises a cryogenic feeding device 3 operatively disposed to receive cryogenic process fluid 1 from the supply vessel 2. The cryogenic feeding device 3 is configured to pressurize the cryogenic process fluid 1 which leaves the cryogenic feeding device 3 as a pressurized process fluid 4 which is still at a cryogenic temperature. The cryogenic feeding device 3 may be configured to increase the pressure of the cryogenic process fluid 1 from about 0.5 MPa to pressures useful for filling a vehicle fuel tank, normally from 20 to 100 MPa, and typically around 80 MPa. The pressurized process fluid 4 is still very cold, for example -150°C, when it leaves the cryogenic feeding device 3.

The system therefore comprises a process fluid treatment arrangement for transforming at least a portion of the pressurized cryogenic process fluid 4 leaving the cryogenic feeding device 3 into a compressed gas 7 suitable to be dispensed to a compressed gas receiver 26 via a dispenser 25 and/or sent to intermediate storage, if provided for. The process fluid treatment arrangement comprises a first heat exchanger 5. It may comprise one or more further components arranged in-line with the first heat-exchanger 5 and/or one or more further components arranged in parallel to the first heat-exchanger 5, those optional further components configured to heat and/or vaporize the pressurized process fluid 4 from the cryogenic feeding device 3 should further treatment be necessary to form the compressed gas 7 suitable for filling a receiving vessel.

Pressurized cryogenic process fluid 4 from the cryogenic feeding device 3 is heated in the first heat exchanger 5 operatively disposed to receive at least a portion of the cryogenic process fluid 4 pressurized and fed by the cryogenic feeding device 3. In the example embodiment the first heat exchanger 5 is operatively disposed to receive all of the cryogenic process fluid 4 pressurized and fed by the cryogenic feeding device 3. The pressurized cryogenic process fluid 4 is heated in the first heat exchanger 5 by indirect heat exchange with a thermal fluid 11 provided in a thermal fluid reservoir 12.

The thermal fluid reservoir 12 is a reservoir container filled with the thermal fluid 11 at a thermal fluid temperature above the cryogenic temperature of the pressurized process fluid 4 at a process fluid inlet of the first heat exchanger 5. The thermal fluid 11 is circulated in a thermal fluid circuit comprising the thermal fluid reservoir 12, the first heat exchanger 5, and a first thermal fluid pump 14 configured to circulate the thermal fluid 11 from the thermal fluid reservoir 12 to and through the first heat exchanger 5 and from there back into and through the thermal fluid reservoir 12.

The thermal fluid 11 may advantageously be provided as a liquid. The thermal fluid reservoir 12 may accordingly comprise or consist of a bath of liquid thermal fluid 11 contained in the reservoir container. Circulating the thermal fluid 11 in the thermal fluid circuit involves removing thermal fluid 11 from the bath and reintroducing thermal fluid 11 into the bath. In advantageous embodiments the thermal fluid 11 is chosen to have a standard boiling point above 50°C or above 80°C, preferably above 100°C, at 1 bar. It may have a standard freeze point below -50°C or below -70°C, at 1 bar.

A shell and tube design may be chosen for the first heat exchanger 5. In such a design, the first heat exchanger 5 comprises a casing with an inlet and an outlet for the casing-side fluid. The other one of the two heat exchanging fluids is conveyed through the casing in one or more fluid channels formed as one or more helically coiled tubes. In the example embodiment the pressurized cryogenic process fluid 4 is the channel-side fluid conveyed in the fluid channels and the thermal fluid 11 is the casing-side fluid which surrounds the fluid channels in direct contact with the fluid channels (tubes). Advantageously, the first heat exchanger 5 is a coiled-tube heat exchanger. If the first heat exchanger 5 is designed as a helically coiled-tube heat exchanger, both heat exchanging fluids 4 and 11 are circulated through the first heat exchanger 5 in a helical or spiral flow path, preferably in counter flow or cross-flow, to intensively transfer heat from the thermal fluid 11 to the pressurized cryogenic process fluid 4.

The thermal fluid 11 cooled in the first heat exchanger 5 is fed back into the thermal fluid reservoir 12. The pressurized process fluid 4 leaving the first heat exchanger 5 may directly be sent to the compressed gas receiver 26, as for example a receiving vessel such as a vehicle tank and/or an on-site storage vessel, if its temperature allows for.

The pressurized process fluid 4 may however leave the first heat exchanger 5 at a temperature that is still too cold for dispensing it to the compressed gas receiver 26 or feeding it to intermediate storage. The process fluid treatment arrangement may therefore comprise a heater 6, for example an electric resistance heater, to heat a portion of or all the pressurized process fluid 4 leaving the first heat exchanger 5. The heater 6 may serve as an in-line electric trim heater. The heater 6, if present, is operatively disposed to receive at least a portion of the warmed process fluid 4 from the first heat exchanger 5 and configured to heat this a least a portion of the warmed process fluid 4 further, expediently to a temperature allowing to fill the pressurized and tempered process fluid leaving the heater 6 as the compressed gas 7 directly into a receiving vessel such as a vehicle tank and/or an on-site storage vessel.

The system may comprise one or more compressed gas storage vessels 20 for intermediate storage of compressed gas 7 formed in the process fluid treatment arrangement. The one or more compressed gas storage vessels 20 may operatively be disposed to receive at least a portion 21 of the compressed gas 7 from the process fluid treatment arrangement. In the example embodiment the one or more compressed gas storage vessels 20 are operatively disposed to receive compressed gas 7 from the heater 6. The one or more compressed gas storage vessels 20 may be arranged stationary, i.e. fixed on-site, or on a mobile compressed gas storage trailer to allow for quick replacement, or may comprise a combination of one or more stationary compressed gas storage vessels 20 and one or more mobile compressed gas storage vessels 20.

The dispenser 25 may operatively be disposed to receive compressed gas 8 by-passing the one or more compressed gas storage vessels 20, and in this sense directly from the process fluid treatment arrangement, here, from the heater 6. All or only a portion of the compressed gas 7 formed in the process fluid treatment arrangement may be conveyed directly, as formed, to the dispenser 25 and dispensed via the dispenser 25 to the compressed gas receiver 26 as for example a vehicle fuel tank.

If the system comprises the one or more compressed gas storage vessels 20, all or only a portion of the compressed gas 7 formed in the process fluid treatment arrangement may be directed to the one or more compressed gas storage vessels 20 and stored therein for later use. The dispenser 25 may operatively be disposed, at least in principle, to receive compressed gas 22 only from the one or more compressed gas storage vessels 20 for dispensing it to the compressed gas receiver 26. All of the compressed gas 7 formed in the process fluid treatment arrangement may be sent, under this premise, to the one or more compressed gas storage vessels 20. In the example embodiment, however, the one or more compressed gas storage vessels 20 is/are operatively disposed to receive at least a portion 21 of the compressed gas 7, and the dispenser 25 is operatively disposed to receive compressed gas 8 by-passing the one or more compressed gas storage vessels 20 and to receive compressed gas 22 from the one or more compressed gas storage vessels 20. The system may comprise flow regulating means, e.g. valves, for directing the compressed gas fractions 8 and 22 selectively to the dispenser 25, i.e. one at a time. The flow regulating means may furthermore enable conveying both compressed gas fractions 8 and 22 concurrently to the dispenser 25, for example as a mixture.

Compressed gas 22 from the one or more compressed gas storage vessels 20 may be directed to the dispenser 25 e.g. if the cryogenic feeding device 3 is not ready to send product to the dispenser 25. The dispenser 25 may dispense the compressed gas directly to the compressed gas receiver 26 if the gas is cold enough. More commonly, the compressed gas 22 is too warm to be dispensed directly. Likewise, the compressed gas 8 may be too warm for being dispensed directly. The compressed gas 8 in the conveying line by-passing the one or more compressed gas storage vessels 20 may have been warmed after a longer rest time.

The system comprises a second heat exchanger 10 operatively disposed to receive at least a portion 23 of the compressed gas 8 and/or 22 and configured to cool this at least a portion 23 by indirect heat exchange with the thermal fluid 11 before sending it to the dispenser 25. The second heat exchanger 10 is configured to cool the at least a portion 23 of the compressed gas 8 and/or 9 by indirect heat exchange with the thermal fluid 11 to a temperature within a temperature range suitable for dispensing, for example, to a temperature within the range from -17.5°C to -40°C, preferable to below -33°C.

The system, for example the dispenser 25, may furthermore comprise a temperature sensor for measuring a temperature representative for the compressed gas 8 and/or 22 directed to the dispenser 25 and a distributor 24 operatively disposed to receive the compressed gas 8 and/or 22. The dispenser 25 is operatively disposed to receive compressed gas via the distributor 24. The distributor 24, if present, is configured for sending the compressed gas 8 and/or 22 directly via the dispenser 25 to the compressed gas receiver 26, if the measured temperature allows for, and is furthermore configured for sending the at least a portion 23 of the compressed gas 8 and/or 22 to the second heat exchanger 10, if the measured temperature is too high. If sent to the second heat exchanger 10, at least a portion 23 is cooled against the thermal fluid 11 to a temperature within a temperature range suitable for dispensing, as mentioned above. The compressed gas suitably cooled then gets dispensed via the dispenser 25.

The second heat exchanger 10 is a component of the thermal fluid circuit and is operatively disposed to receive thermal fluid 11 from the thermal fluid reservoir 12. Thermal fluid 11 may accordingly be circulated from the thermal fluid reservoir 12 also to and through the second heat exchanger 10 and from there back to and through the thermal fluid reservoir 12.

A shell and tube design may be chosen for the second heat exchanger 10. In such a design, the second heat exchanger 10 comprises a casing with an inlet and an outlet for the casing-side fluid. The other one of the two heat exchanging fluids is conveyed through the casing in one or more fluid channels formed as one or more helically coiled tubes. In the example embodiment the compressed gas 23 is the channel-side fluid conveyed in the fluid channels and the thermal fluid 11 is the casing-side fluid which surrounds the fluid channels in direct contact with the fluid channels (tubes). Advantageously, the second heat exchanger 10 is a coiled-tube heat exchanger. If the second heat exchanger 10 is designed as a helically coiled-tube heat exchanger, both heat exchanging fluids 23 and 11 are circulated through the second heat exchanger 10 in a helical or spiral flow path, preferably in counter or cross-flow, to intensively transfer heat from the thermal fluid 11 to the compressed gas 23.

The first heat exchanger 5 and the second heat exchanger 10 are arranged in parallel with respect to the thermal fluid 11. The thermal fluid circuit comprises a first branch 13 and a second branch 15 in parallel to the first branch 13. The first branch 13 comprises the thermal fluid reservoir 12, the first heat exchanger 5, and the first thermal fluid pump 14 configured to circulate the thermal fluid 11 in the first branch 13. The second branch 15 comprises the thermal fluid reservoir 12, the second heat exchanger 10, and a second thermal fluid pump 16 configured to circulate the thermal fluid 11 in the second branch 15.

The thermal fluid circuit splits into the two branches 13 and 15 upstream of the pumps 14 and 15 and heat exchangers 5 and 10, and the two branches 13 and 15 are united again downstream of the pumps 14 and 15 and heat exchangers 5 and 10. The thermal fluid circuit may split into the two branches 13 and 15 downstream of a thermal fluid outlet of the thermal fluid reservoir 12 and/or the two branches 13 and 15 may be united again upstream of a thermal fluid inlet of the thermal fluid reservoir 12. In the example embodiment, the thermal fluid outlet and the thermal fluid inlet are common to both branches 13 and 15.

The thermal fluid pumps 14 and 16 may be configured to operate independently from one another. Thermal fluid 11 may accordingly be circulated in the first branch 13 only or in the second branch 15 only or, with both pumps 14 and 16 operating, in both branches 13 and 15 at the same time. Providing a first thermal fluid pump 14 in the first branch 13 for the first heat exchanger 5 and a further, second pump 16 in the second branch 15 for the second heat exchanger 10 increases the flexibility with respect to heat management. The flow rates of the thermal fluid 11 can be optimized for each of the heat exchangers 5 and 10 individually.

The first pump 14 may turn on any time the cryogenic feeding device 3 is running, as well as when venting to either cool the cryogenic feeding device 3 or venting to keep pressure from building too high in the supply vessel 2. The second thermal fluid pump 16 circulates the thermal fluid 11 as required to keep the second heat exchanger 10 at the correct temperature, typically about -40C.

The system may comprise a variable drive configured for driving the first pump 14 and/or the second pump 16 at varying speed(s). The variable drive may comprise a first electric drive motor driving the first pump 14 and/or a second electric drive motor driving the second pump 16. The variable drive may advantageously be a variable frequency drive (VFD) for varying the speed of the respective pump by varying the input frequency of the respective electric drive motor. The speed of the first pump 14 may be varied to keep the temperature of the thermal fluid exiting the first heat exchanger 5 within a predetermined temperature range. The speed of the second pump 16 may be varied to keep the temperature of the thermal fluid exiting the second heat exchanger 10 within a predetermined temperature range and/or to keep the temperature of the compressed gas exiting the second heat exchanger 10 within a predetermined temperature range.

The thermal fluid reservoir 12 contains the thermal fluid 11 in an amount exceeding an amount necessary to sustain circulation in the thermal fluid circuit. If the thermal circuit, including both branches 13 and 15, contains a total mass M₁₁ of thermal fluid 11 and the reservoir container contains a mass m₁₂ out of this total mass, the ratio m₁₂ / M₁₁ may advantageously fulfill the relation m₁₂ / M₁₁ > 0.5 or, more preferably, m₁₂ / M₁₁ ≥ 0.6, or m₁₂ / M₁₁ ≥ 0.7.

The thermal fluid circuit may comprise a thermal fluid heater 18, as in particular an electric resistance heater, for heating the thermal fluid 11. The thermal fluid heater 18 may serve to compensate for any shortfall of heat, for example, if the cold accumulated by the thermal fluid 11 in the first heat exchanger 5 cannot be fully compensated by the transfer of heat to the thermal fluid 11 in the second heat exchanger 10. The thermal fluid heater 18 may be arranged in a conveying line conveying the thermal fluid 11 to the first heat exchanger 5 or in a conveying line conveying the thermal fluid 11 back to the thermal fluid reservoir 12. In the example embodiment, the thermal fluid heater 18 is disposed in the reservoir container and immersed in the thermal fluid 11 of the thermal fluid reservoir 12.

## Claims

1. A method for forming a compressed gas and dispensing it to a compressed gas receiver, the method comprising the following steps:
(a) providing a process fluid (1) at a cryogenic temperature;
(b) pressurizing the process fluid (1) and feeding the pressurized process fluid (4) at still a cryogenic temperature to a first heat exchanger (5);
(c) providing a thermal fluid (11), such as for example D-Limonene, in a thermal fluid reservoir (12) at a thermal fluid temperature above the cryogenic temperature of the pressurized process fluid (4);
(d) forming the compressed gas (7) from the pressurized process fluid (4), wherein forming the compressed gas includes heating the pressurized process fluid (4) in the first heat exchanger (5) by indirect heat exchange with the thermal fluid (11);
(e) optionally, providing one or more compressed gas storage vessels (20) and feeding compressed gas (22) from the one or more compressed gas storage vessels (20) to a dispenser (25);
(f) feeding compressed gas (7) formed in step (d) to the dispenser (25) and/or the one or more compressed gas storage vessels (20), if present;
(g) cooling compressed gas (23) formed in step (d) and/or from the one or more compressed gas storage vessels (20), if present, by indirect heat exchange with the thermal fluid (11) in a second heat exchanger (10) and feeding the cooled compressed gas to the dispenser (25); and
(h) dispensing the compressed gas (7) via the dispenser (25) to the compressed gas receiver (26);
**characterized in that**
(i) the first heat exchanger (5) and the second heat exchanger (10) are arranged in parallel with respect to the thermal fluid (11), and wherein a first pump (14) feeds the thermal fluid (11) of the thermal fluid reservoir (12) through the first heat exchanger (5) and a second pump (16) feeds the thermal fluid (11) of the thermal fluid reservoir (12) through the second heat exchanger (15).

2. The method according to claim 1, wherein one of the pressurized process fluid (4) and thermal fluid (11) is conveyed in one or more fluid channels through the first heat exchanger (5) and the other one surrounds the one or more fluid channels in direct contact thereby effecting the indirect heat exchange.

3. The method according to any one of the preceding claims, wherein the thermal fluid (11) of the thermal fluid reservoir (12) is circulated in a thermal fluid circuit that comprises the thermal fluid reservoir (12), the first heat exchanger (5), and one or more pumps (14, 16) feeding the thermal fluid in the thermal fluid circuit.

4. The method according to any one of the preceding claims wherein one of the pressurized process fluid (4) and thermal fluid (11) is conveyed in one or more fluid channels through the second heat exchanger (10) and the other one surrounds the one or more fluid channels in direct contact thereby effecting the indirect heat exchange.

5. The method according to any one of the preceding claims, wherein the one or more compressed gas storage vessels (20) is/are provided, and at least a portion (21) of the compressed gas (7) formed in step (d) is fed to the one or more compressed gas storage vessels (20) for intermediate storage, wherein the step of feeding compressed gas to the dispenser (25) may comprise or consist of feeding compressed gas (22) from the one or more compressed gas storage vessels (20) to the dispenser (25).

6. The method according to any one of the preceding claims, wherein the one or more compressed gas storage vessels (20) is/are provided, and at least a portion (8) of the compressed gas (7) formed in step (d) is fed to the dispenser (25) while bypassing the one or more compressed gas storage vessels (20).

7. A system for forming compressed gas and dispensing it to a compressed gas receiver, the system comprising:
(a) a source (2) of a process fluid (1) at a cryogenic temperature;
(b) a cryogenic feeding device (3) operatively disposed to receive process fluid from the source (2) and configured to pressurize the process fluid and feed the pressurized process fluid (4) at still a cryogenic temperature;
(c) a process fluid treatment arrangement (5, 6) for forming a compressed gas (7) from the pressurized process fluid (4), the process fluid treatment arrangement (5, 6) comprising a first heat exchanger (5) operatively disposed to receive pressurized process fluid (4) from the cryogenic feeding device (3) at a cryogenic temperature and configured to heat the pressurized process fluid by indirect heat exchange with a thermal fluid (11);
(d) a thermal fluid reservoir (12) of the thermal fluid (11) at a temperature above the cryogenic temperature of the pressurized process fluid (4), the thermal fluid reservoir (12) operatively disposed to provide the thermal fluid for the first heat exchanger (5);
(e) optionally, one or more compressed gas storage vessels (20) operatively disposed to receive and configured to store compressed gas (21) from the process fluid treatment arrangement (5, 6);
(f) a dispenser (25) operatively disposed to receive compressed gas (8) from the process fluid treatment arrangement (5,6) and/or operatively disposed to receive compressed gas (22) from the one or more storage vessels (20), if present, and configured to dispense compressed gas to the compressed gas receiver (26); and
(g) a second heat exchanger (10) operatively disposed to receive compressed gas (8) from the process fluid treatment arrangement (5,6) and/or operatively disposed to receive compressed gas (22) from the one or more compressed gas storage vessels (20), if present, wherein the second heat exchanger (10) is configured to cool the received compressed gas by indirect heat exchange with the thermal fluid (11), and wherein the thermal fluid reservoir (12) is operatively disposed to provide the thermal fluid (11) for the second heat exchanger (10);
**characterized by**
(h) a thermal fluid circuit with a first branch (13) and a second branch (15) arranged in parallel to the first branch (13) with respect to the thermal fluid (11), wherein the first branch (13) comprises the thermal fluid reservoir (12), the first heat exchanger (5) and a first pump (14) operatively disposed and configured to circulate the thermal fluid (11) of the thermal fluid reservoir (12) in the first branch (13) through the thermal fluid reservoir (12) and the first heat exchanger (5), and wherein the second branch (15) comprises the thermal fluid reservoir (12), the second heat exchanger (10) and a second pump (16) operatively disposed and configured to circulate the thermal fluid (11) of the thermal fluid reservoir (12) in the second branch (15) through the thermal fluid reservoir (12) and the second heat exchanger (10).

8. The system according to claim 7, wherein the thermal fluid reservoir (12) comprises a reservoir container which contains a bath of the thermal fluid (11), the thermal fluid reservoir (12) operatively disposed to provide the thermal fluid (11) for the first heat exchanger (5) from the bath.

9. The system according to claim 8, wherein the thermal fluid circuit contains a total mass M11 of thermal fluid (11) and the reservoir container contains a mass m12 of thermal fluid (11) out of this total mass, and wherein the ratio m12 / M11 fulfills the relation m12 / M11 ≥ 0.5 or m12 /M11 ≥ 0.6 or m12 / M11 ≥ 0.7.

10. The system according to any one of claims 7 to 9, wherein the first heat exchanger (5) and/or the second heat exchanger (10) comprises:
- a casing with an inlet and an outlet for a casing-side fluid (11), which is one of the thermal fluid (11) and the pressurized process fluid (4); and
- one or more fluid channels mounted within the casing and operatively disposed to receive a channel-side fluid (4) and configured to convey the channel-side fluid (4) through the casing, the channel-side fluid (4) being the other one of the pressurized process fluid (4) and the thermal fluid (11);
- wherein the respective heat exchanger (5, 10) is configured to bring the casing-side fluid (11) in direct contact with the one or more fluid channels for the channel-side fluid (4).

11. The system according to any one of claims 7 to 10, wherein the first heat exchanger (5) and/or the second heat exchanger (10) is a helically coiled heat exchanger which comprises a casing for one of the thermal fluid (11) and the pressurized process fluid (4) as a casing-side fluid (11) and one or more helically coiled fluid channels mounted within the casing for conveying the other one of the pressurized process fluid and the thermal fluid as a channel-side fluid (4) through the casing.

12. The system according to any one of claims 7 to 11, wherein the process fluid treatment arrangement (5, 6) comprises a heater (6) operatively disposed to receive pressurized process fluid (4) from the first heat exchanger (5) and configured to heat this process fluid further, and/or the system further comprises a thermal fluid heater (18) operatively disposed, as for example in the thermal fluid reservoir (12), and configured to heat the thermal fluid (11).

## Patentansprüche

1. Verfahren zur Bildung eines komprimierten Gases und dessen Abgabe an eine Aufnahmevorrichtung für komprimiertes Gas, wobei das Verfahren folgende Schritte umfasst:
(a) ein Prozessfluid (1) wird bei kryogener Temperatur bereitgestellt,
(b) das Prozessfluid (1) wird unter Druck gesetzt, und das unter Druck stehende Prozessfluid (4) wird bei noch kryogener Temperatur einem ersten Wärmetauscher (5) zugeführt,
(c) ein Thermofluid (11) wie etwa D-Limonen wird in einem Thermofluidreservoir (12) bei einer Thermofluidtemperatur bereitgestellt, die höher liegt als die kryogene Temperatur des unter Druck stehenden Prozessfluids (4),
(d) komprimiertes Gas (7) wird aus dem unter Druck stehenden Prozessfluid (4) gebildet, wobei bei der Bildung des komprimierten Gases (7) das unter Druck stehende Prozessfluid (4) im ersten Wärmetauscher (5) durch mittelbaren Wärmeaustausch mit dem Thermofluid (11) erwärmt wird,
(e) optional wird/werden ein oder mehrere Vorratsgefäße (20) für komprimiertes Gas vorgesehen, von dem/denen komprimiertes Gas (22) einer Abgabevorrichtung (25) zugeführt wird,
(f) im Schritt (d) gebildetes komprimiertes Gas (7) wird der Abgabevorrichtung (25) und/oder dem einen oder den mehreren Vorratsgefäßen (20) für komprimiertes Gas, sofern solche vorhanden sind, zugeführt,
(g) im Schritt (d) gebildetes Gas (23) und/oder Gas (23) aus dem einen oder den mehreren Vorratsgefäßen (20) für komprimiertes Gas, sofern solche vorhanden sind, wird durch mittelbaren Wärmeaustausch mit dem Thermofluid (11) in einem zweiten Wärmetauscher (10) gekühlt, und das gekühlte komprimierte Gas wird der Abgabevorrichtung (25) zugeführt, und
(h) das komprimierte Gas (7) wird über die Abgabevorrichtung (25) an die Aufnahmevorrichtung (26) für komprimiertes Gas abgegeben,
**dadurch gekennzeichnet, dass**
(i) der erste Wärmetauscher (5) und der zweite Wärmetauscher (10) in Bezug auf das Thermofluid (11) parallel angeordnet sind, und wobei eine erste Pumpe (14) das Thermofluid (11) des Thermofluidreservoirs (12) durch den ersten Wärmetauscher (5) zuführt und eine zweite Pumpe (16) das Thermofluid (11) des Thermofluidreservoirs (12) durch den zweiten Wärmetauscher (15) zuführt.

2. Verfahren gemäß Anspruch 1, wobei entweder das unter Druck stehende Prozessfluid (4) oder das Thermofluid (11) in einem oder mehreren Fluidkanälen durch den ersten Wärmetauscher (5) gefördert wird und das andere den einen oder die mehreren Fluidkanäle in unmittelbarem Kontakt umgibt und dadurch den mittelbaren Wärmeaustausch bewirkt.

3. Verfahren gemäß einem der vorhergehenden Ansprüche, wobei das Thermofluid (11) des Thermofluidreservoirs (12) in einem Thermofluidkreislauf umläuft, der das Thermofluidreservoir (12), den ersten Wärmetauscher (5) und eine oder mehrere das Thermofluid (11) im Thermofluidkreislauf zuführende Pumpen (14, 16) umfasst.

4. Verfahren gemäß einem der vorhergehenden Ansprüche, wobei entweder das unter Druck stehende Prozessfluid (4) oder das Thermofluid (11) in einem oder mehreren Fluidkanälen durch den zweiten Wärmetauscher (10) gefördert wird und das andere den einen oder die mehreren Fluidkanäle in unmittelbarem Kontakt umgibt und dadurch den mittelbaren Wärmeaustausch bewirkt.

5. Verfahren gemäß einem der vorhergehenden Ansprüche, wobei das eine oder die mehreren Vorratsgefäße (20) für komprimiertes Gas vorgesehen wird/werden und zumindest ein Teil (21) des im Schritt (d) gebildeten komprimierten Gases (7) dem einen oder den mehreren Vorratsgefäßen (20) für komprimiertes Gas zur Zwischenspeicherung zugeführt wird, wobei bei dem Schritt, bei dem komprimiertes Gas der Abgabevorrichtung (25) zugeführt wird, komprimiertes Gas (22) von dem einen oder den mehreren Vorratsgefäßen (20) für komprimiertes Gas der Abgabevorrichtung (25) zugeführt werden kann.

6. Verfahren gemäß einem der vorhergehenden Ansprüche, wobei das eine oder die mehreren Vorratsgefäße (20) für komprimiertes Gas vorgesehen wird/werden und zumindest ein Teil (8) des im Schritt (d) gebildeten komprimierten Gases (7) unter Umgehung des einen oder der mehreren Vorratsgefäße (20) für komprimiertes Gas der Abgabevorrichtung (25) zugeführt wird.

7. System zur Bildung von komprimiertem Gas und dessen Abgabe an eine Aufnahmevorrichtung für komprimiertes Gas, wobei das System Folgendes umfasst:
(a) eine Quelle (2) für ein Prozessfluid (1) bei kryogener Temperatur,
(b) eine kryogene Zuführvorrichtung (3), die betriebsmäßig so angeordnet ist, dass sie Prozessfluid von der Quelle (2) aufnimmt, und die so konfiguriert ist, dass sie das Prozessfluid unter Druck setzt und das unter Druck stehende Prozessfluid (4) bei noch kryogener Temperatur zuführt,
(c) eine Prozessfluidbehandlungsanordnung (5, 6) zur Bildung eines komprimierten Gases (7) aus dem unter Druck stehenden Prozessfluid (4), wobei die Prozessfluidbehandlungsanordnung (5, 6) einen ersten Wärmetauscher (5) umfasst, der betriebsmäßig so angeordnet ist, dass er unter Druck stehendes Prozessfluid (4) von der kryogenen Zuführvorrichtung (3) bei kryogener Temperatur aufnimmt, und der so konfiguriert ist, dass er das unter Druck stehende Prozessfluid durch mittelbaren Wärmeaustausch mit einem Thermofluid (11) erwärmt,
(d) ein Thermofluidreservoir (12) mit dem Thermofluid (11) bei einer Temperatur, die höher liegt als die kryogene Temperatur des unter Druck stehenden Prozessfluids (4), wobei das Thermofluidreservoir (12) betriebsmäßig so angeordnet ist, dass es das Thermofluid (11) für den ersten Wärmetauscher (5) bereitstellt,
(e) optional ein oder mehrere Vorratsgefäße (20) für komprimiertes Gas, die betriebsmäßig so angeordnet sind, dass sie komprimiertes Gas (21) von der Prozessfluidbehandlungsanordnung (5, 6) aufnehmen, und die so konfiguriert sind, dass sie komprimiertes Gas (21) aus der Prozessfluidbehandlungsanordnung (5, 6) speichern,
(f) eine Abgabevorrichtung (25), die betriebsmäßig so angeordnet ist, dass sie komprimiertes Gas (8) von der Prozessfluidbehandlungsanordnung (5, 6) aufnimmt, und/oder betriebsmäßig so angeordnet ist, dass sie komprimiertes Gas (22) von dem einen oder den mehreren Vorratsgefäßen (20) aufnimmt, sofern solche vorhanden sind, und die so konfiguriert ist, dass sie komprimiertes Gas an die Aufnahmevorrichtung (26) für komprimiertes Gas abgibt, und
(g) einen zweiten Wärmetauscher (10), der betriebsmäßig so angeordnet ist, dass er komprimiertes Gas (8) von der Prozessfluidbehandlungsanordnung (5, 6) aufnimmt, und/oder betriebsmäßig so angeordnet ist, dass er komprimiertes Gas (22) von dem einen oder den mehreren Vorratsgefäßen (20) für komprimiertes Gas aufnimmt, sofern solche vorhanden sind, wobei der zweite Wärmetauscher (10) so konfiguriert ist, dass er das aufgenommene komprimierte Gas durch mittelbaren Wärmeaustausch mit dem Thermofluid (11) kühlt, und wobei das Thermofluidreservoir (12) betriebsmäßig so angeordnet ist, dass es das Thermofluid (11) für den zweiten Wärmetauscher (10) bereitstellt,
**gekennzeichnet durch**
(h) einen Thermofluidkreislauf mit einem ersten Zweig (13) und einem in Bezug auf das Thermofluid (11) parallel zum ersten Zweig (13) angeordneten zweiten Zweig (15), wobei der erste Zweig (13) das Thermofluidreservoir (12), den ersten Wärmetauscher (5) und eine erste Pumpe (14) umfasst, die betriebsmäßig so angeordnet und konfiguriert ist, dass sie das Thermofluid (11) des Thermofluidreservoirs (12) im ersten Zweig (13) durch das Thermofluidreservoir (12) und den ersten Wärmetauscher (5) hindurch umlaufen lässt, und wobei der zweite Zweig (15) das Thermofluidreservoir (12), den zweiten Wärmetauscher (10) und eine zweite Pumpe (16) umfasst, die betriebsmäßig so angeordnet und konfiguriert ist, dass sie das Thermofluid (11) des Thermofluidreservoirs (12) im zweiten Zweig (15) durch das Thermofluidreservoir (12) und den zweiten Wärmetauscher (10) hindurch umlaufen lässt.

8. System gemäß Anspruch 7, wobei das Thermofluidreservoir (12) einen ein Bad mit dem Thermofluid (11) enthaltenden Reservoirbehälter umfasst, wobei das Thermofluidreservoir (12) betriebsmäßig so angeordnet ist, dass es das Thermofluid (11) für den ersten Wärmetauscher (5) aus dem Bad bereitstellt.

9. System gemäß Anspruch 8, wobei der Thermofluidkreislauf eine Gesamtmasse M₁₁ an Thermofluid (11) enthält und der Reservoirbehälter von dieser Gesamtmasse eine Masse m₁₂ an Thermofluid (11) enthält, und wobei das Verhältnis m₁₂ / M₁₁ die Beziehung m₁₂ / M₁₁ ≥ 0,5 oder m₁₂ / M₁₁ ≥ 0,6 oder m₁₂ / M₁₁ ≥ 0,7 erfüllt.

10. System gemäß einem der Ansprüche 7 bis 9, wobei der erste Wärmetauscher (5) und/oder der zweite Wärmetauscher (10) Folgendes umfasst:
- ein Gehäuse mit einem Einlass und einem Auslass für ein gehäuseseitiges Fluid (11), bei dem es sich entweder um das Thermofluid (11) oder um das unter Druck stehende Prozessfluid (4) handelt, und
- einen oder mehrere innerhalb des Gehäuses montierte Fluidkanäle, die betriebsmäßig so angeordnet sind, dass sie ein kanalseitiges Fluid (4) aufnehmen, und die so konfiguriert sind, dass sie das kanalseitige Fluid (4) durch das Gehäuse fördern, wobei es sich bei dem kanalseitigen Fluid (4) um das andere aus Thermofluid (11) und unter Druck stehendem Prozessfluid (4) handelt,
- wobei der jeweilige Wärmetauscher (5, 10) so konfiguriert ist, dass er das gehäuseseitige Fluid (11) in unmittelbaren Kontakt mit dem einen oder den mehreren Fluidkanälen für das kanalseitige Fluid (4) bringt.

11. System gemäß einem der Ansprüche 7 bis 10, wobei der erste Wärmetauscher (5) und/oder der zweite Wärmetauscher (10) ein wendelförmiger Wärmetauscher ist, der ein Gehäuse für entweder das Thermofluid (11) oder das unter Druck stehende Prozessfluid (4) als gehäuseseitiges Fluid (11) und einen oder mehrere wendelförmige Fluidkanäle umfasst, die innerhalb des Gehäuses montiert sind, um das andere aus Thermofluid und unter Druck stehendem Prozessfluid als kanalseitiges Fluid (4) durch das Gehäuse zu fördern.

12. System gemäß einem der Ansprüche 7 bis 11, wobei die Prozessfluidbehandlungsanordnung (5, 6) eine Heizung (6) umfasst, die betriebsmäßig so angeordnet ist, dass sie unter Druck stehendes Prozessfluid (4) vom ersten Wärmetauscher (5) aufnimmt, und die so konfiguriert ist, dass sie dieses Prozessfluid weiter erwärmt, und/oder wobei das System ferner eine Thermofluidheizung (18) umfasst, die wie etwa im Thermofluidreservoir (12) betriebsmäßig so angeordnet und konfiguriert ist, dass sie das Thermofluid (11) erwärmt.

## Revendications

1. Procédé pour former un gaz comprimé et le distribuer à un récepteur de gaz comprimé, le procédé comprenant les étapes suivantes :
(a) la fourniture d'un fluide de processus (1) à une température cryogénique ;
(b) la mise sous pression du fluide de processus (1) et l'alimentation du fluide de processus sous pression (4) à une température encore cryogénique vers un premier échangeur de chaleur (5) ;
(c) la fourniture d'un fluide thermique (11), par exemple du D-Limonène, dans un réservoir de fluide thermique (12) à une température de fluide thermique supérieure à la température cryogénique du fluide de processus sous pression (4) ;
(d) la formation de gaz comprimé (7) à partir du fluide de processus sous pression (4), la formation du gaz comprimé (7) comprenant le chauffage du fluide de processus sous pression (4) dans le premier échangeur de chaleur (5) par échange de chaleur indirect avec le fluide thermique (11) ;
(e) facultativement, la fourniture d'un ou de plusieurs récipients de stockage de gaz comprimé (20) et l'alimentation de gaz comprimé (22) depuis ledit un ou lesdits plusieurs récipients de stockage de gaz comprimé (20) vers un distributeur (25) ;
(f) l'alimentation de gaz comprimé (7) formé à l'étape (d) vers le distributeur (25) et / ou vers ledit un ou lesdits plusieurs récipients de stockage de gaz comprimé (20), s'ils sont disponibles ;
(g) le refroidissement de gaz comprimé (23) formé à l'étape (d) et / ou provenant dudit un ou desdits plusieurs récipients de stockage de gaz comprimé (20), s'ils sont disponibles, par échange de chaleur indirect avec le fluide thermique (11) dans un second échangeur de chaleur (10) et l'alimentation du gaz comprimé refroidi vers le distributeur (25) ; et
(h) la distribution du gaz comprimé (7) au récepteur de gaz comprimé (26) par l'intermédiaire du distributeur (25) ;
**caractérisé en ce que**
(i) le premier échangeur de chaleur (5) et le second échangeur de chaleur (10) sont disposés parallèlement par rapport au fluide thermique (11), une première pompe (14) alimentant le fluide thermique (11) du réservoir de fluide thermique (12) à travers le premier échangeur de chaleur (5), et une seconde pompe (16) alimentant le fluide thermique (11) du réservoir de fluide thermique (12) à travers le second échangeur de chaleur (15).

2. Procédé selon la revendication 1, dans lequel le fluide de processus sous pression (4) ou le fluide thermique (11) est transporté dans un ou plusieurs canaux de fluide à travers le premier échangeur de chaleur (5), et l'autre entoure ledit un ou lesdits plusieurs canaux de fluide en contact direct et effectue ainsi l'échange de chaleur indirect.

3. Procédé selon l'une quelconque des revendications précédentes, dans lequel le fluide thermique (11) du réservoir de fluide thermique (12) circule dans un circuit de fluide thermique qui comprend le réservoir de fluide thermique (12), le premier échangeur de chaleur (5) et une ou plusieurs pompes (14, 16) alimentant le fluide thermique (11) dans le circuit de fluide thermique.

4. Procédé selon l'une quelconque des revendications précédentes, dans lequel le fluide de processus sous pression (4) ou le fluide thermique (11) est transporté dans un ou plusieurs canaux de fluide à travers le second échangeur de chaleur (10), et l'autre entoure ledit un ou lesdits plusieurs canaux de fluide en contact direct et effectue ainsi l'échange de chaleur indirect.

5. Procédé selon l'une quelconque des revendications précédentes, dans lequel ledit un ou lesdits plusieurs récipients de stockage de gaz comprimé (20) sont fournis, et au moins une partie (21) du gaz comprimé (7) formé à l'étape (d) est alimentée vers ledit un ou lesdits plusieurs récipients de stockage de gaz comprimé (20) pour le stockage intermédiaire, l'étape d'alimentation de gaz comprimé vers le distributeur (25) pouvant comprendre ou consister en l'alimentation de gaz comprimé (22) depuis ledit un ou lesdits plusieurs récipients de stockage de gaz comprimé (20) vers le distributeur (25).

6. Procédé selon l'une quelconque des revendications précédentes, dans lequel ledit un ou lesdits plusieurs récipients de stockage de gaz comprimé (20) sont fournis, et au moins une partie (8) du gaz comprimé (7) formé à l'étape (d) est alimentée vers le distributeur (25) tout en contournant ledit un ou lesdits plusieurs récipients de stockage de gaz comprimé (20).

7. Système pour former du gaz comprimé et le distribuer à un récepteur de gaz comprimé, le système comprenant :
(a) une source (2) d'un fluide de processus (1) à une température cryogénique ;
(b) un dispositif d'alimentation cryogénique (3) disposé fonctionnellement pour recevoir du fluide de processus depuis la source (2) et configuré pour mettre sous pression le fluide de processus et pour alimenter le fluide de processus sous pression (4) à une température encore cryogénique ;
(c) un ensemble de traitement de fluide de processus (5, 6) pour former un gaz comprimé (7) à partir du fluide de processus sous pression (4), l'ensemble de traitement de fluide de processus (5, 6) comprenant un premier échangeur de chaleur (5) disposé fonctionnellement pour recevoir un fluide de processus sous pression (4) depuis le dispositif d'alimentation cryogénique (3) à une température cryogénique et configuré pour chauffer le fluide de processus sous pression par échange de chaleur indirect avec un fluide thermique (11) ;
(d) un réservoir de fluide thermique (12) rempli du fluide thermique (11) à une température supérieure à la température cryogénique du fluide de processus sous pression (4), le réservoir de fluide thermique (12) étant disposé fonctionnellement pour fournir le fluide thermique (11) pour le premier échangeur de chaleur (5) ;
(e) facultativement, un ou plusieurs récipients de stockage de gaz comprimé (20) disposés fonctionnellement pour recevoir et configurés pour stocker du gaz comprimé (21) provenant de l'ensemble de traitement de fluide de processus (5, 6) ;
(f) un distributeur (25) disposé fonctionnellement pour recevoir du gaz comprimé (8) depuis l'ensemble de traitement de fluide de processus (5, 6) et / ou disposé fonctionnellement pour recevoir du gaz comprimé (22) depuis ledit un ou lesdits plusieurs récipients de stockage (20), s'ils sont disponibles, et configuré pour distribuer du gaz comprimé au récepteur de gaz comprimé (26) ; et
(g) un second échangeur de chaleur (10) disposé fonctionnellement pour recevoir du gaz comprimé (8) depuis l'ensemble de traitement de fluide de processus (5, 6) et / ou disposé fonctionnellement pour recevoir du gaz comprimé (22) depuis ledit un ou lesdits plusieurs récipients de stockage de gaz comprimé (20), s'ils sont disponibles, le second échangeur de chaleur (10) étant configuré pour refroidir le gaz comprimé reçu par échange de chaleur indirect avec le fluide thermique (11), le réservoir de fluide thermique (12) étant disposé fonctionnellement pour fournir le fluide thermique (11) pour le second échangeur de chaleur (10) ;
**caractérisé par**
(h) un circuit de fluide thermique comportant une première branche (13) et une seconde branche (15) disposée parallèlement à la première branche (13) par rapport au fluide thermique (11), la première branche (13) comprenant le réservoir de fluide thermique (12), le premier échangeur de chaleur (5) et une première pompe (14) disposée fonctionnellement et configurée pour faire circuler le fluide thermique (11) du réservoir de fluide thermique (12) dans la première branche (13) à travers le réservoir de fluide thermique (12) et le premier échangeur de chaleur (5), la seconde branche (15) comprenant le réservoir de fluide thermique (12), le second échangeur de chaleur (10) et une seconde pompe (16) disposée fonctionnellement et configurée pour faire circuler le fluide thermique (11) du réservoir de fluide thermique (12) dans la seconde branche (15) à travers le réservoir de fluide thermique (12) et le second échangeur de chaleur (10).

8. Système selon la revendication 7, dans lequel le réservoir de fluide thermique (12) comprend un récipient de réservoir qui contient un bain rempli du fluide thermique (11), le réservoir de fluide thermique (12) étant disposé fonctionnellement pour fournir le fluide thermique (11) pour le premier échangeur de chaleur (5) à partir du bain.

9. Système selon la revendication 8, dans lequel le circuit de fluide thermique contient une masse totale M₁₁ de fluide thermique (11), dont le récipient de réservoir contient une masse m₁₂ de fluide thermique (11), le rapport m₁₂/M₁₁ satisfaisant la relation m₁₂/M₁₁ ≥ 0,5 ou m₁₂/M₁₁ ≥ 0,6 ou m₁₂/M₁₁ ≥ 0,7.

10. Système selon l'une quelconque des revendications 7 à 9, dans lequel le premier échangeur de chaleur (5) et / ou le second échangeur de chaleur (10) comprend/comprennent :
- un boîtier comportant une entrée et une sortie pour un fluide côté boîtier (11) qui est le fluide thermique (11) ou le fluide de processus sous pression (4) ; et
- un ou plusieurs canaux de fluide montés à l'intérieur du boîtier et disposés fonctionnellement pour recevoir un fluide côté canal (4) et configurés pour transporter le fluide côté canal (4) à travers le boîtier, le fluide côté canal (4) étant l'autre parmi le fluide de processus sous pression (4) et le fluide thermique (11) ;
- l'échangeur de chaleur respectif (5, 10) étant configuré pour amener le fluide côté boîtier (11) en contact direct avec ledit un ou lesdits plusieurs canaux de fluide pour le fluide côté canal (4).

11. Système selon l'une quelconque des revendications 7 à 10, dans lequel le premier échangeur de chaleur (5) et / ou le second échangeur de chaleur (10) est un échangeur de chaleur hélicoïdal qui comprend un boîtier pour le fluide thermique (11) ou le fluide de processus sous pression (4) en tant que fluide côté boîtier (11) et un ou plusieurs canaux de fluide hélicoïdaux montés à l'intérieur du boîtier pour transporter l'autre parmi le fluide de processus sous pression et le fluide thermique en tant que fluide côté canal (4) à travers le boîtier.

12. Système selon l'une quelconque des revendications 7 à 11, dans lequel l'ensemble de traitement de fluide de processus (5, 6) comprend un réchauffeur (6) disposé fonctionnellement pour recevoir du fluide de processus sous pression (4) depuis le premier échangeur de chaleur (5) et configuré pour chauffer supplémentairement ce fluide de processus, et / ou le système comprend en outre un réchauffeur de fluide thermique (18) disposé fonctionnellement, par exemple dans le réservoir de fluide thermique (12), et configuré pour chauffer le fluide thermique (11).
